# FASCICULE DE BREVET EUROPEEN

(11) **EP 1 555 194 B1**
(45) Date de publication et mention de la délivrance du brevet: **11.10.2006**
(21) Numéro de dépôt: 04370037.6
(22) Date de dépôt: 22.12.2004
(51) Int. Cl.: B62H 3/08

(54) **Dispositif pour maintenir en position de stationnement des cycles**
Parkhalter für Zweiräder
Parking stand for two-wheelers

(30) Priorité: 19.01.2004 FR 0400444
(43) Date de publication de la demande: 20.07.2005
(73) Titulaire: Mottez S. A., 59193 Erquinghem Lys (FR)
(72) Inventeur: Genestin, Nicolas, c/o Mottez Société Anonyme, 59193 Erquinghem Lys (FR)
(74) Mandataire: Duthoit, Michel Georges André

(56) Documents cités:
- DE-U- 20 013 081
- DE-U- 29 513 143
- FR-A- 1 237 123
- FR-A- 1 553 133
- US-A- 2 806 605

## Description

L'invention concerne un dispositif pour maintenir en position de stationnement des cycles. Elle concerne plus particulièrement un dispositif de type chevalet ou râtelier dans lesquels s'engage, par exemple, la roue avant du cycle.

Actuellement, pour ce qui est des supports pour parquer les cycles, on connaît les dispositifs comportant des étriers venant en prise et pincer la roue d'un cycle.

On connaît ainsi un dispositif de stationnement pour cycles constitué d'une succession de couples d'arceaux, disposés parallèles et répartis sur un élément bâti allongé, chacun desdits couples formant un étrier pour maintenir une des roues d'un cycle. Toutefois, ce dispositif présente une capacité linéaire de stationnement limitée.

Afin d'augmenter la capacité linéaire de stationnement des dispositifs connus, limitée par les parties débordantes du cycle, et notamment le guidon et le pédalier, les positions relatives des roues pincées de deux cycles contigus sont alternativement décalées en hauteur.

En combinaison avec cette disposition, on connaît également d'alterner le sens d'entrée des étriers sur le bâti. La capacité de stationnement s'en retrouve augmentée, les cycles étant parqués alternativement de part et d'autre de l'élément à fonction de bâti.

On connaît ainsi le document FR-2.147.466 relatif à un dispositif de stationnement qui présente des étriers à un seul sens d'entrée disposés régulièrement dans des directions opposées sur un élément de bâti allongé.

Les roues pincées des cycles parqués sur un même côté du bâti sont décalées en hauteur. Pour ce faire et maintenir la roue d'un cycle à une position décalée dite haute, le dispositif utilise une rampe et une entretoise de stabilité.

Néanmoins, la complexité de la structure et la nécessité de fabriquer de nouvelles pièces augmentent les coûts de production. De plus, les rampes disposées de part et d'autre d'un même élément allongé se traduisent par un encombrement important et des difficultés de stockage.

Le but de la présente invention est de proposer un dispositif de stationnement pour cycle qui pallie les inconvénients précités, tout en permettant, ou non, de parquer indifféremment des cycles selon deux directions de part et d'autre d'au moins un bâti commun, les roues en prise de deux cycles contigus étant décalées.

Un autre but de l'invention est de proposer un dispositif module, lesdits modules pouvant s'empiler lors du stockage.

Un autre but de l'invention est de proposer un procédé de fabrication du dispositif conforme à l'invention permettant de réduire les coûts de production.

D'autres buts et avantages de l'invention apparaîtront au cours de la description qui va suivre, qui n'est donnée qu'à titre indicatif et qui n'a pas pour but de la limiter.

L'invention concerne un dispositif de stationnement pour cycle, constitué d'une succession de couples d'arceaux, appelés arceaux partenaires, ou similaires, disposés verticaux, chacun desdits couples formant un étrier pour maintenir une des roues d'un cycle, lesdits couples d'arceaux étant espacés entre eux pour écarter les cycles les uns des autres et comportant des moyens pour alternativement disposer la roue en prise du cycle à une hauteur différente de la roue en prise d'un cycle contigu, afin d'augmenter la capacité de stationnement, caractérisé en ce qu'au moins un desdits couples présente au moins un arceau comportant au moins un cintrage orienté vers son arceau partenaire de telle façon à constituer au moins un appui de soutien pour ladite roue.

L'invention concerne également un procédé de fabrication d'un dispositif de stationnement conforme à l'invention, caractérisé en ce qu'on utilise uniquement trois types de pièces, pour constituer la structure du dispositif, à savoir :
- un élément linéaire,
- un arceau pour le maintien de la roue d'undit cycle à une position basse,
- un arceau de hauteur supérieure présentant au moins un cintrage pour le maintien de la roue d'undit cycle à une position haute.

L'invention sera mieux comprise à la lecture de la description suivante qui en fait partie intégrante et parmi lesquels :
- la figure 1 est une vue de face d'un dispositif conforme à l'invention,
- la figure 2 est une vue de dessus de l'invention telle qu'illustrée à la figure 1,
- la figure 3 est une vue de face d'un arceau pour le maintien d'une roue d'un cycle à une position dite basse, du dispositif conforme à l'invention,
- la figure 4 est une vue respective de côté et de face d'un arceau pour le maintien d'une roue d'un cycle à une position dite haute, du dispositif conforme à l'invention.

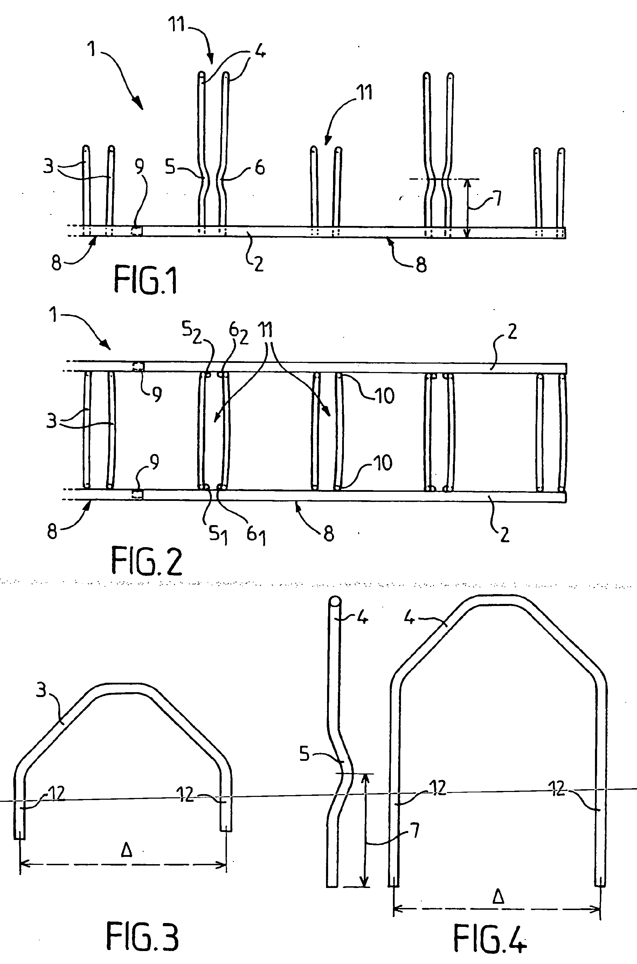

L'invention concerne tout d'abord un dispositif de stationnement 1 pour cycles. Comme le montre la figure 1, il est constitué d'une succession de couples 11 d'arceaux 3, 4, disposés globalement verticaux, étant espacés entre eux et comportant des moyens 5, 6 pour alternativement disposer la roue en prise du cycle à une hauteur 7 différente de la roue en prise d'un cycle contigu, afin d'augmenter la capacité de stationnement.

Selon l'invention, au moins un desdits couples 11 présente au moins un arceau 4 comportant au moins un cintrage 5, 6 orienté vers son arceau partenaire de telle façon à constituer au moins un appui de soutien pour ladite roue.

Ainsi, comme le montre la figure 2, un couple 11 d'arceaux 4 peut ne présenter qu'un seul cintrage 5₁ ; 5₂ ; 6₁ ; 6₂ sur un seul arceau 4 orienté vers son arceau partenaire correspondant de telle façon à constituer au moins un appui pour ladite roue.

Avantageusement, un arceau 4 peut présenter, suivant une même opération de fabrication et un même axe de pliage / cintrage, deux cintrage 5₁, 5₂ ou 6₁, 6₂.

Mis en combinaison avec son arceau partenaire 4, les deux cintrages 5₁, 5₂, 6₁, 6₂ forment deux appuis de soutien pour la roue en prise d'un cycle et constituent ainsi une position stable de maintien.

Les couples 11 d'arceau 4 partenaires sont verticaux et peuvent avantageusement être orientés de telle façon à faciliter la mise en place de la roue en constituant un guide divergent vers le haut. Par ailleurs, cette orientation divergente, définissant une légère inclinaison des arceaux, permet d'admettre le pincement de pneumatiques de différentes sections.

Selon un mode de réalisation du dispositif conforme à l'invention, les deux arceaux 4 d'un couple 11 comportent au moins un cintrage 5, 6, ledit au moins un cintrage 5, 6 de chacun desdits arceaux 4 dudit couple 11 étant orienté vers son arceau partenaire correspondant de telle façon à constituer au moins un appui pour ladite roue.

Ainsi, chacun desdits arceaux partenaires peut ne présenter qu'un seul cintrage. Avantageusement, le couple d'arceaux peut présenter deux appuis 5₁, 6₂ ; 5₂, 6₁ de soutien pour la roue d'un cycle en disposant le montant 12 d'un arceau présentant un cintrage en vis-à-vis avec le montant 12 de son arceau partenaire sans cintrage.

Selon une autre variante, chacun desdits arceaux partenaires peut présenter deux cintrages, lesdits cintrages 5₁, 5₂, 6₁, 6₂ étant orientés l'un vers l'autre de telle façon à constituer deux appuis de soutien.

Ainsi, les couples d'arceaux cintrés sur un ou deux arceaux partenaires peuvent maintenir la roue, par exemple, avant d'un cycle. Ils présentent avantageusement deux entrées, ce qui permet de parquer un cycle indifféremment selon deux sens de stockage.

Selon un mode de réalisation du dispositif de stationnement 1 conforme à l'invention, on dispose de façon alternée un couple d'arceaux 3 sans cintrage contigu avec un couple d'arceaux 4 avec cintrage 5. La roue en prise d'un cycle est alors décalée d'une hauteur 7 avec la roue en prise d'un cycle contigu. Ainsi, les parties débordantes d'un cycle tel que le guidon d'un deux roues ou le pédalier d'un bicycle sont avantageusement imbriqués, ce qui permet d'augmenter la capacité de stationnement du dispositif.

Selon un mode de réalisation du dispositif conforme à l'invention, les couples 11 d'arceaux destinés à maintenir une roue à une position dite haute et comportant au moins un cintrage 5, présentent une hauteur supérieure aux couples d'arceaux 3 sans cintrage destinés à maintenir la roue en prise d'un cycle à une position dite basse.

Selon un mode de réalisation du dispositif conforme à l'invention, les montants 12 des arceaux 3, 4 sont espacés d'une distance égale Δ.

Selon un mode de réalisation, les arceaux 3, 4 sont fixés à au moins un support commun. Ils peuvent être fixés par tous moyens connus, et notamment soudés à leur extrémité audit support commun.

Ce support peut prendre toutes les formes possibles pour obtenir toutes les dispositions spatiales imaginables.

Selon un premier mode de réalisation du dispositif, les arceaux sont fixés à au moins un élément, notamment linéaire, commun 2, tel qu'une barre ou un tube par exemple. Ils peuvent être également avantageusement fixés à leur extrémité perpendiculairement à deux barres linéaires disposées parallèles.

Selon d'autres variantes, on peut imaginer toutes formes de support commun. Par exemple, ces supports peuvent prendre la forme de deux anneaux concentriques disposés horizontalement sur un même plan et sur lequel sont disposés radialement lesdits couples d'arceaux, chacune des extrémités desdits arceaux étant jointe respectivement au premier ou au deuxième anneaux concentriques.

Avantageusement, l'ensemble ainsi constitué de couples d'arceaux fixés à au moins un support commun peut, selon un mode de réalisation constituer un module 8. Ce module présente avantageusement des moyens 9 pour être fixés à un autre module 8.

Selon un mode de réalisation, les barres linéaires 2 support des couples 11 d'arceaux 4 sont creuses et présentent un rétrécissement de section 9 à leur extrémité pour être emboîtées dans une autre barre linéaire.

Selon un mode de réalisation, les modules 8 constitués de couples d'arceaux fixés perpendiculairement à deux barres linéaires disposées parallèles sont empilables. Pour ce faire, les fixations ou soudures 10 entre l'extrémité d'un arceau et unedite barre, sont réalisées sur les faces internes en vis-à-vis desdites barres linéaires.

Ainsi, les modules peuvent être stockés avec un encombrement réduit en les empilant les uns sur les autres, les arceaux s'enchevêtrant les uns avec les autres, les barres linéaires venant en butée les unes contre les autres constituant ainsi une position stable de rangement.

Ce dispositif permet une fabrication et un assemblage simple tout en permettant au dispositif des capacités de stationnement linéaire améliorées.

L'invention concerne également un procédé de fabrication d'un dispositif de stationnement où l'on utilise avantageusement que trois types de pièces pour constituer la structure du dispositif, à savoir :
- un élément linéaire 2, tel que notamment une barre ou tube,
- un arceau 3 pour le maintien de la roue d'un cycle à une position basse,
- un arceau 4 de hauteur supérieure présentant au moins un cintrage pour le maintien de la roue d'un cycle à une position haute.

Ainsi ce procédé de fabrication permet de réduire les coûts relatifs au stockage des matières premières et intermédiaires, ainsi que les coûts de fabrication. Afin de réduire les coûts, l'arceau de taille supérieure peut ne présenter qu'un seul axe de cintrage / pliage pour constituer deux cintrages sur un même arceau.

Naturellement, d'autres modes de mise en oeuvre de l'invention, à la portée de l'homme de l'art, auraient pu être envisagés sans pour autant sortir du cadre de l'invention défini par les revendications.

## Revendications

1. Dispositif de stationnement (1) pour cycles, constitué d'une succession de couples (11) d'arceaux (3, 4), appelés partenaires, ou similaires, chacun desdits couples formant un étrier pour maintenir une des roues d'un cycle, lesdits couples d'arceaux (3, 4) étant espacés entre eux pour écarter les cycles les uns des autres et comportant des moyens pour alternativement disposer la roue en prise du cycle à une hauteur différente de la roue en prise d'un cycle contigu, afin d'augmenter la capacité de stationnement, **caractérisé en ce qu**'au moins un desdits couples (11) présente au moins un arceau (4) comportant au moins un cintrage (5) orienté vers son arceau partenaire de telle façon à constituer au moins un appui de soutien pour ladite roue.

2. Dispositif selon la revendication 1, **caractérisé en ce que** les deux arceaux partenaires (4) d'au moins undit couple (11) comportent au moins un cintrage (5), ledit au moins un cintrage (5, 6) de chacun desdits arceaux (4) dudit couple (11) étant orienté vers son arceau partenaire correspondant de telle façon à constituer au moins un appui pour ladite roue.

3. Dispositif selon la revendication 1 ou 2, **caractérisé en ce qu**'il présente alternativement un couple (11) d'arceaux (3) sans cintrage, contigu avec un couple (11) d'arceaux (4) avec cintrage(s) (5).

4. Dispositif selon la revendication 3, **caractérisé en ce que** les couples (11) d'arceaux (4) comportant au moins un cintrage (5) présentent une hauteur supérieure aux couples (11) d'arceaux (3) sans cintrage.

5. Dispositif selon la revendication 1, **caractérisé en ce que** les montants (12) des arceaux (3, 4) sont espacés d'une distance égale (Δ).

6. Dispositif selon l'une des revendications précédentes, **caractérisé en ce que** les arceaux (3, 4) sont fixés à au moins un support commun (2).

7. Dispositif selon la revendication 6 ou 7, **caractérisé en ce que** les arceaux (3, 4) sont fixés à au moins une barre (2) commune.

8. Dispositif selon l'une des revendications précédentes, **caractérisé en ce que** chaque dispositif de stationnement est un module (8), chaque module présentant des moyens (9) pour être fixés à un autre module.

9. Dispositif selon la revendication 7 et 8, **caractérisé en ce qu**'au moins une desdites barres linéaires est creuse et présente un rétrécissement de section (9) à son extrémité pour être emboîtée dans une autre barre linéaire (2).

10. Dispositif selon la revendication 7, **caractérisé en ce que** les arceaux sont soudés à leur extrémité à deux barres linéaires (2) disposées parallèles, les soudures (10) étant réalisées sur les faces internes en vis-à-vis desdites barres linéaires (2), pour que lesdits modules soient empilables l'un sur l'autre.

11. Procédé de fabrication d'un dispositif de stationnement conforme à la revendication 1, **caractérisé en ce que** l'on utilise uniquement trois types de pièces pour constituer la structure du dispositif, à savoir :
- un élément linéaire (2),
- un arceau (3) pour le maintien de la roue d'undit cycle à une position basse,
- un arceau (4) de hauteur supérieure présentant au moins un cintrage pour le maintien de la roue d'undit cycle à une position haute.

## Claims

1. A parking device (1) for cycles, formed by a succession of pairs (11) of cradles (3, 4), called partners, or similar, each of said pairs forming a yoke for holding one of the wheels of a cycle, said pairs of cradles (3, 4) being spaced apart from one another for spreading the cycles from one another and comprising means for placing alternately the meshed wheel of the cycle at a height different from the meshed wheel of a contiguous cycle, in order to increase the parking capacity, **characterised in that** at least one of said pairs (11) exhibits at least one cradle (4) including at least one flexion (5) oriented towards its partner cradle so as to form at least one back-up rest for said wheel.

2. A device according to claim 1, **characterised in that** both partner cradles (4) of at least one pair (11) including at least one flexion (5), said at least one flexion (5, 6) of each of said cradles (4) of said pair (11) being oriented towards its corresponding partner cradle so as to form at least one rest for said wheel.

3. A device according to claim 1 or 2, **characterised in that** it exhibits alternately a pair (11) of cradles (3) without flexion, contiguous with a pair (11) of cradles (4) with flexion(s) (5).

4. A device according to claim 3, **characterised in that** the pairs (11) of cradles (4) including at least one flexion (5) exhibit a height greater than the pairs (11) of cradles (3) without flexion.

5. A device according to claim 1, **characterised in that** the uprights (12) of the cradles (3, 4) are spaced apart by an equal distance (Δ).

6. A device according to any of the previous claims, **characterised in that** the cradles (3, 4) are fixed to at least one common support (2).

7. A device according to any of the claims 6 or 7, **characterised in** the cradles (3, 4) are attached to at least one common bar (2).

8. A device according to any of the previous claims, **characterised in that** each parking device is a module (8), each module exhibiting means (9) for attachment to another module.

9. A device according to claim 7 or 8, **characterised in that** at least one of said linear bars is hollow and exhibits a narrowed section (9) at the end thereof for nesting into another linear bar (2).

10. A device according to 7, **characterised in that** the cradles are welded at their ends to two linear bars (2) arranged in parallel, the weldings (10) being formed on the internal faces opposite said linear bars (2), so that said modules can be piled up on top of one another.

11. A method of manufacture of a parking device according to claim 1, **characterised in that** solely three types of parts are used to form the structure of the device, i.e.:
- a linear element (2),
- a cradle (3) for holding the wheel of a said cycle in a low position,
- a cradle (4) of greater height exhibiting at least one flexion for holding the wheel of a said cycle in a high position.

## Patentansprüche

1. Abstellvorrichtung (1) für Fahrräder, bestehend aus einer Reihenfolge von Paaren (11) aus als Partner bezeichneten Spanten (3, 4) oder dergleichen, wobei jedes von den besagten Paaren einen Haltebügel bildet, um das eine von den Rädern eines Fahrrades zu halten, wobei die besagten Paare von Spanten (3, 4) voneinander beabstandet seien, um die Fahrräder voneinander in Abstand zu halten, und Mittel umfassen, um abwechselnd das Rad im Eingriff eines Fahrrades in einer unterschiedlichen Höhe als das Rad im Eingriff eines anliegenden Fahrrades anzuordnen, um die Abstellkapazität zu erhöhen, **dadurch gekennzeichnet, daß** wenigstens eines von den besagten Paaren (11) zumindest ein Spant (4) aufweist, das zumindest eine Krümmung (5) umfaßt, die auf sein Partnerspant auf solche Art und Weise ausgerichtet ist, um wenigstens eine Stützlehne für das besagte Rad zu bilden.

2. Vorrichtung nach Anspruch 1, **dadurch gekennzeichnet, daß** beide Partnerspanten (4) von wenigstens einem genannten Paar (11) zumindest eine Krümmung (5) umfassen, wobei zumindest eine besagte Krümmung (5, 6) von jedem der besagten Spanten (4) des besagten Paares (11) auf sein entsprechendes Partnerspant auf solche Art und Weise ausgerichtet ist, um wenigstens eine Abstützung für das besagte Rad zu bilden.

3. Vorrichtung nach Anspruch 1 oder 2, **dadurch gekennzeichnet, daß** sie abwechselnd ein Paar (11) von Spanten (3) ohne Krümmung, anliegend an einem Paar (11) von Spanten (4) mit Krümmung (5), aufweist.

4. Vorrichtung nach Anspruch 3, **dadurch gekennzeichnet, daß** die Paare (11) von Spanten (4), umfassend zumindest eine Krümmung (5), eine Höhe aufweisen, die größer ist als jene der Paare (11) von Spanten (3) ohne Krümmung.

5. Vorrichtung nach Anspruch 1, **dadurch gekennzeichnet, daß** die Führungsstützen (12) der Spanten (3, 4) in einem gleichen Abstand (Δ) beabstandet sind.

6. Vorrichtung nach einem der vorgehenden Ansprüche, **dadurch gekennzeichnet, daß** die Spanten (3, 4) an wenigstens einem gemeinsamen Träger (2) befestigt sind.

7. Vorrichtung nach Anspruch 6 oder 7, **dadurch gekennzeichnet, daß** die Spanten (3, 4) an wenigstens einem gemeinsamen Balken (2) befestigt sind.

8. Vorrichtung nach einem der vorgehenden Ansprüche, **dadurch gekennzeichnet, daß** jede Abstellvorrichtung ein Modul (8) ist, wobei jedes Modul Mittel (9) aufweist, um an ein anderes Modul befestigt zu werden.

9. Vorrichtung nach Anspruch 7 und 8, **dadurch gekennzeichnet, daß** wenigstens einer von den besagten linearen Balken hohl ist und eine Einschnürung (9) an seinem Ende aufweist, um in einen anderen linearen Balken (2) eingefügt zu werden.

10. Vorrichtung nach Anspruch 7, **dadurch gekennzeichnet, daß** die Spanten an ihrem Ende an zwei parallel angeordneten linearen Balken (2) geschweißt sind, wobei die Schweißungen (10) auf den inneren Seiten gegenüber den besagten linearen Balken (2) ausgeführt sind, damit die besagten Module aufeinander stapelbar sind.

11. Verfahren zur Herstellung einer Abstellvorrichtung nach Anspruch 1, **dadurch gekennzeichnet, daß** nur drei Stücktypen benutzt werden, um diese Struktur der Vorrichtung zu bilden, nämlich:
- ein lineares Element (2),
- ein Spant (3) für das Halten des Rades von einem solchen Fahrrad in einer unteren Position,
- ein Spant (4) mit größerer Höhe, aufweisend zumindest eine Krümmung für das Halten des Rades von einem solchen Fahrrad in einer hochgelegenen Position.
